# EUROPEAN PATENT APPLICATION

(11) **EP 4 249 329 A1**
(43) Date of publication of application: **27.09.2023**
(21) Application number: 22163644.2
(22) Date of filing: 22.03.2022
(51) Int. Cl.: B60R 25/045

(54) **ROAD VEHICLES ANTI-THEFT SECURITY DEVICE BASED ON AUTOMOTIVE EMBEDDED SYSTEMS SOFTWARE**

(71) Applicant: Figueiredo Miura, Andre, São Paulo (BR)
(72) Inventor: Figueiredo Miura, Andre, São Paulo (BR)
(74) Representative: Clarke, Modet y Cía., S.L.

(57) **Abstract**

**ROAD VEHICLES ANTI-THEFT SECURITY DEVICE BASED ON AUTOMOTIVE EMBEDDED SYSTEMS SOFTWARE** presents itself as an anti-theft device for the automotive field, acting as a tool to aid in the recovery and protection of the asset. **In technical terms, it is an electronic device connected to an embedded automotive network, which can take actions autonomously or receive remote commands to avoid the next ignition cycles and/or adding limitations regarding the performance and nominal working load of the protected vehicles. The modular hardware allows it to be coupled with different expansion boards that allows the adoption of several wireless data transmission technologies such as GPRS, GSM, LTE, WiFi, Bluetooth, LoRa, ZigBee, SigFox and satellite communication. Due to its technical features, the effect of anti-theft activation via software remains active even when the transgressor removes the device completely from the vehicle. The Over-The-Air (OTA) update feature makes it possible to load new security strategies in the hardware, consequently increasing the difficulty of carrying out vehicle's theft.** These features differs it from the alternatives found in the state of the art, the current solutions performs the anti-theft task with the aid of electromechanical device, normally the well-known relays. In addition, the proposed device supports performance limitation and remote shutdown of the protected vehicle, features that accredit it to the post of invention.

## Description

### Technical Field

The invention stands in the automotive segment, it is useful as a standalone device or being integrated to a fleet management and tracking systems. The invention describes an anti-theft device connected to the embedded automotive network, providing the protection of the asset.

### Background

It has been while since automotive starter lock systems first appeared due to the high market value of the vehicles and the loads they carry. However, the proposed invention presents essential structural differences in relation to patents registered in the same field of application.

**DOCUMENT:** MU8700618-9 U2 - **REGISTER DATE:** 27/03/2007 - **TITLE:** "STEERING BOX AND IGNITION BLOCKING OF VEHICLES AND SIMILAR DEVICE" - **ABSTRACT:** "The present object refers to an unprecedented and functional device that blocks the steering and ignition box of vehicles and the like. Through a button to access and trigger the operation of the locking system connected to the steering box, the ignition and the rest of the main parts that make the vehicle work, all connected to a panel installed in the vehicle or in a remote control, which by radiofrequency or infrared signal, it will send the signals to unlock the system, through the use of a password with numbers and letters, resuming the vehicle to its operation."

The document describes the user interface to lock and unlock the vehicle; however, the action on the vehicle that would cause the lockage is not detailed. It is only able to execute new commands when the user is close to the vehicle.

The "ROAD VEHICLES ANTI-THEFT SECURITY DEVICE BASED ON AUTOMOTIVE EMBEDDED SYSTEMS SOFTWARE" enables integration with commercial off-the-shelf (COTS) trackers, on-board computers and other data transmission devices, which enables the device remote operation. Once connected to the vehicle network, it manages to send commands to avoid the next ignition cycles and/or adding limitations regarding the performance and nominal working load of the protected vehicles. The modular hardware allows it to be coupled with different expansion boards that allows the adoption of several wireless data transmission technologies such as GPRS, GSM, LTE, WiFi, Bluetooth, LoRa, ZigBee, SigFox and satellite communication.

**DOCUMENT:** C10704375-9 E2 - **REGISTER DATE:** 19/06/2008 - **TITLE:** "ANTI-THEFT DEVICE WITH SPARK PLUG CURRENT BLOCKER" - **ABSTRACT:** "The present certificate of invention addition refers to locks to inhibit and prevent theft of motorcycles in general, which is installed between the spark plug wire connector and its operation through of a negative current input. This connection cancels the input current, preventing the spark plug operation and, consequently, preventing the motorcycle from moving."

The patent describes a blocking device that is installed in direct contact with the spark plug, preventing the electric current flow and consequently inhibiting the engine start and operation. However, the device and the action behind locking and unlocking the vehicle is purely mechanical; it does not allows remote control of the procedure.

The "ROAD VEHICLES ANTI-THEFT SECURITY DEVICE BASED ON AUTOMOTIVE EMBEDDED SYSTEMS SOFTWARE" is an electronic device, it works directly on the automotive network that the ECU's (Electronic Control Unit) use to exchange data with each other. The device is compatible with the specifications of physical media for automotive communication standardized by SAE (Society of Automotive Engineers) and by ISO (International Organization for Standardization). For example: SAE J1708, SAE J1850, IS09141, IS014230, IS011898, IS015031, SAE J2411 and others.

**DOCUMENT:** MU8601061-1 U2 - **REGISTER DATE:** 23/05/2006 - **TITLE:** "MULTI-FUEL CONVERTER WITH ANTI-THEFT BLOCKER, ELECTRONIC ADJUSTMENT FOR CHOKE, AND MICRO-CONTROLLED COLD STARTING" - **ABSTRACT:** "Comprised of a device, mounted in a plastic box (1), the fuel converter recalculates the vehicle's original injection parameters, allowing it to use alternative fuel. It has a potentiometer (2) to control the performance level of the conversion to improve vehicle operation. Such actuation level index is indicated on the device's side panel through LEDs (3). The device uses an electrical cable harness (6) that captures, through appropriate connectors (4), the electric injection signal coming from the vehicle's original central unit, returning them recalculated to act on the vehicle's injection nozzles. It also has a cable (5) for electrical connection to ground potential of the electrical system. Such a device innovates when it offers the following features: Anti-theft lock, which is activated when the user does not identify himself through a password or through the appropriate button for such task; Electronic choke adjusted for the new fuel, allowing the original choke to also be recalculated for the new fuel; Cold start algorithm, which allows the vehicle's engine to run the first time it is turned on after a long time off."

The invention proposed device adds an external control to the choke of the vehicle, making it possible to implement the anti-theft feature. The document describes the driver's responsibility to control the system locally.

As it can be controlled in real time and remotely with the supervision of a fleet management system by cloud computing, the "ROAD VEHICLES ANTI-THEFT SECURITY DEVICE BASED ON AUTOMOTIVE EMBEDDED SYSTEMS SOFTWARE" allows human intervention on the activation of vehicle's anti-theft security system. This functionality is useful when you want to centralize control to a single fleet manager or to a set of users with permission to do so.

**DOCUMENT:** PI0901588-4 A2 - **REGISTER DATE:** 29/05/2009 - **TITLE:** "ALARM AND ANTI-THEFT SYSTEM FOR VEHICLES WITH IGNITION LOCK AND ACTIVATION AND INFRINGEMENT NOTICE VIA GSM CELL PHONE" - **ABSTRACT:** "It refers to an invention designed to cut off the fuel supply or ignition of stolen or stolen vehicles, the same system detects and warns when the vehicle is stolen or violated through GSM cellular transmission. The owner will be able to interact with the stolen vehicle at a safe distance (from anywhere in the world) and will be able to turn off the engine, start the engine and be notified via a phone call when the vehicle is violated or stolen. Composed of two GSM cell phones (C1 and C2), four relays from 6 to 12v, R1 and R2 with two sections, R3 and R4 being of own manufacture, a 4.5v laser diode (L1), a 12v input and 4.5 to 5v output (T1), a 3.6v backup battery commonly used in cordless phones (B2), a 12OdB siren (S1), a pulse micro switch (15), a two-session switch ( 16), four ATX power supply drivers connectors, an LDR resistor (light dependent resistor), the whole set being controlled by conventional telephone calls."

**DOCUMENT:** BR 10 2016 005734 5 A2 - REGISTER DATE: 16/03/2016 - **TITLE:** "INTERACTIVE ANTI-THEFT DEVICE FOR MOTOR VEHICLES" - **ABSTRACT:** "This report deals with the detailed description accompanied by illustrative figures of a new anti-theft device for motor vehicles, which provides greater security to the user in the anti-theft function, since it promotes greater autonomy and control over the vehicle in functions such as starting or turning off the motor, the activation of locks and other functions of doors and windows, being carried out and self-controlled through remote means such as cell phones, computers, and other communication devices."

The two patents cited above describes remote blocking functionality via GSM. O "ROAD VEHICLES ANTI-THEFT SECURITY DEVICE BASED ON AUTOMOTIVE EMBEDDED SYSTEMS SOFTWARE" has a competitive advantage due to its direct connection to the automotive network; it performs software-level operations, which eliminates the need for electromechanical devices such as relays and the likes. It carries out the operations by sending commands to the embedded electronic systems so that the vehicle stands inhibited to perform the next ignition start or limited in terms of its nominal working capabilities, making it harder to carry out the theft.

### Brief description of drawings

Figure 1 provides the bottom view of the main printed circuit board (PCB).
Figure 2 provides a top view of the main printed circuit board.
Figure 3 depicts the components arrangement on the main PCB. The vast majority of components are SMD (Surface mounted diode) type. X3 and X4 connectors allow the addition of expansion cards. Connector X1 makes the output pins available for external connection.
Figure 4 provides a preview of a mounting pattern for the device.
Figure 5 demonstrates the configuration B of the device's assembly pattern with inductive reading from the automotive network
Figure 6 shows the equipment isometric view; the box external measurements are 91 x 30 x 27 mm.
Figure 7 illustrates the device from another perspective. In this figure, it is possible to observe three holes in the box, two for the passage of the connection wires and one for light indication.
Figure 8 shows the anti-theft system logic flow, including the stages of locking, performance limitation and remote shutdown.
Figure 9 demonstrates the logical steps of the anti-theft system deactivation process.

### Description of the Invention

The "ROAD VEHICLES ANTI-THEFT SECURITY DEVICE BASED ON AUTOMOTIVE EMBEDDED SYSTEMS SOFTWARE" is a tool designed for motor vehicles theft prevention. Its operating principle is characterized by the direct action on the embedded automotive electronic systems through the vehicle's network in order to make the next ignition impossible or adding limitations regarding the vehicle's performance. It is possible to restore the vehicle to proper functioning by performing the reverse process sending commands to remove limitations added to the vehicle's electronic systems.

The "ROAD VEHICLES ANTI-THEFT SECURITY DEVICE BASED ON AUTOMOTIVE EMBEDDED SYSTEMS SOFTWARE" can work autonomously through an algorithm that identifies risk conditions compatible with theft as well as the driver's controlled stops. The modular hardware architecture allows the device to be controlled by equipment with different data transmission technologies such as GPRS, GSM, LTE, WiFi, Bluetooth, LoRa, ZigBee, SigFox, satellite communication, among others. The communication physical means to interface with the device are TTL, RS232, CAN, RS485, SPI and I2C serial interface, thus being easy to integrate with COTS trackers or any data transmission equipment compatible with the technical specifications, as long as it is approved and previously integrated by holder of the invention.

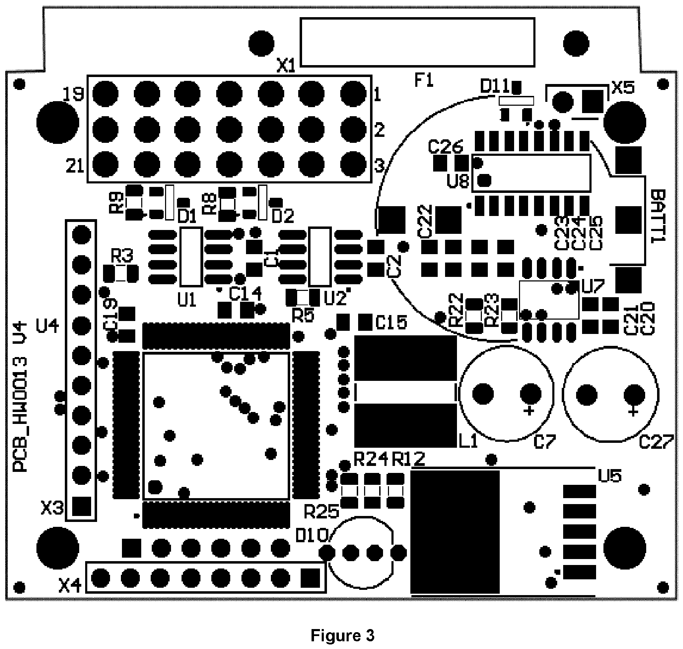

The device has an expandable modular electronic architecture composed of a main printed circuit board that, when connected to complementary accessories or secondary printed circuit boards, as exemplified by the description of figure 3 above, thus becoming compatible with the described data transmission means in the previous paragraph. The main printed circuit board has the necessary hardware characteristics so that on one side it receives data or commands through the means of communication of the previous paragraph and on the other side it communicates with the vehicle's embedded systems through different communication protocols, which enables the intervention of the anti-theft system described in this document.

As a competitive advantage, the device eliminates the need for electromechanical switches, such as relays, which change the vehicle's original installation setup, which considerably reduces installation and maintenance costs, besides avoiding warranty violation. Another advantage is that the anti-theft security system is activated via the device's software, where once activated it is not possible to physically turn it off or circumvent it by removing the device. **After triggering software commands on** the **automotive data network, the effect remains active even if the device is removed from the vehicle, as it keeps the limitations stored in the system. Therefore,** the object of the invention enables a new and high level of security whose concept and functionality no other device has been able to achieve so far.

About usability, the equipment is not limited to anti-theft security functionality. Although not the object of the present claim, the same equipment can additionally provide telemetry information and remote diagnosis of the embedded automotive electronic systems.

The Over the Air (OTA) update feature makes the device universally compatible with different vehicle OEMs and models. During the update process, the device receives, segmented by packs, the new application file through one of the technologies described in the second paragraph of this section. The new software may contain an improvement in the application of the current vehicle or a new library that enables the device installation in a new vehicle with particular electronic system. The update is triggered by the management system or device management platform, these systems are based on cloud computing, so they inherit the features of high availability, being online 24/7 (24 hours a day, 7 days a week).

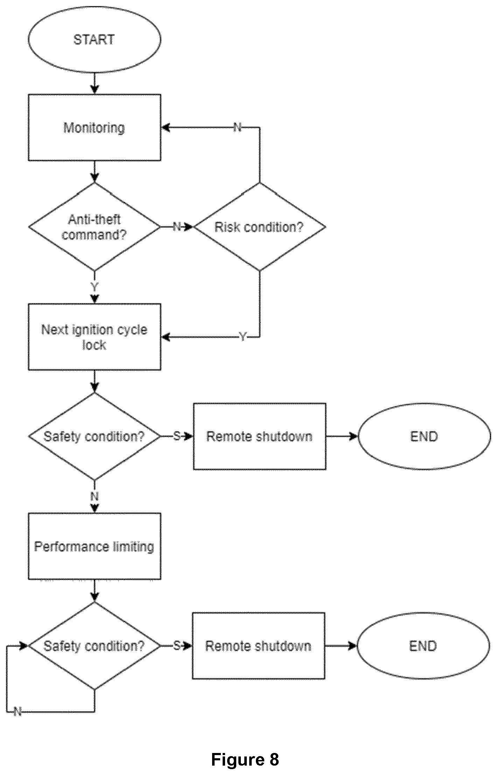

In the anti-theft security activation flow illustrated in Figure 8, if the vehicle is stationary, the device receives the command from equipment that uses the data transmission means described in the second paragraph of this section and immediately starts the anti-theft process. By the end of this stage, the vehicle will be unable to perform the next ignition cycle, or with limited operation in terms of ordinary work performance and capabilities. If the vehicle is in motion, the action process is gradual as it considers several factors in order to provide safety for the driver and other vehicles in transit in the same place. There are several factors considered to perform this action, such as vehicle speed on an uphill or downhill slope, conditions of use of the brake, use of engine brake, engine in low gear, deceleration and acceleration of the vehicle and other situations.

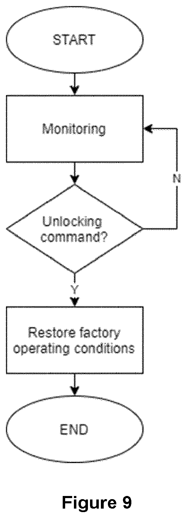

In the anti-theft mode deactivation flow illustrated by Figure 9, the device receives the command from the controller and restores the vehicle's electronic management systems to standard operating conditions so that the vehicle is able to operate under ordinary conditions again.

### Examples of embodiments of the invention

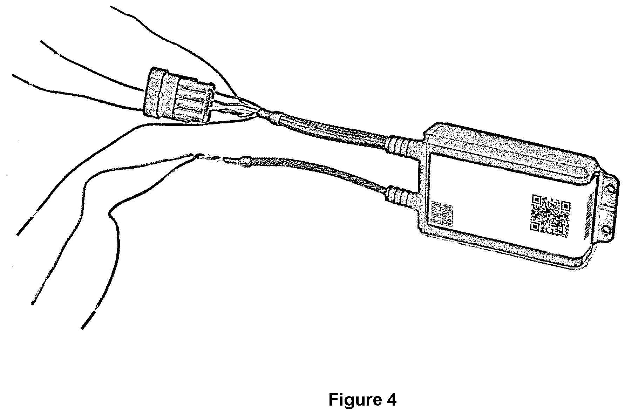

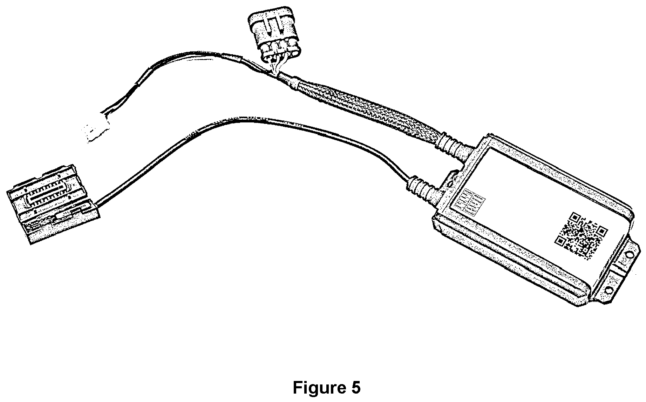

For its materialization, the invention has two essential and inseparable components, the hardware, and the application software. The hardware consists of the main PCB, accessories, plastic housing and connecting wires. Figure 4 demonstrates the mounted in configuration A and Figure 5 shows the device mounted in configuration B.

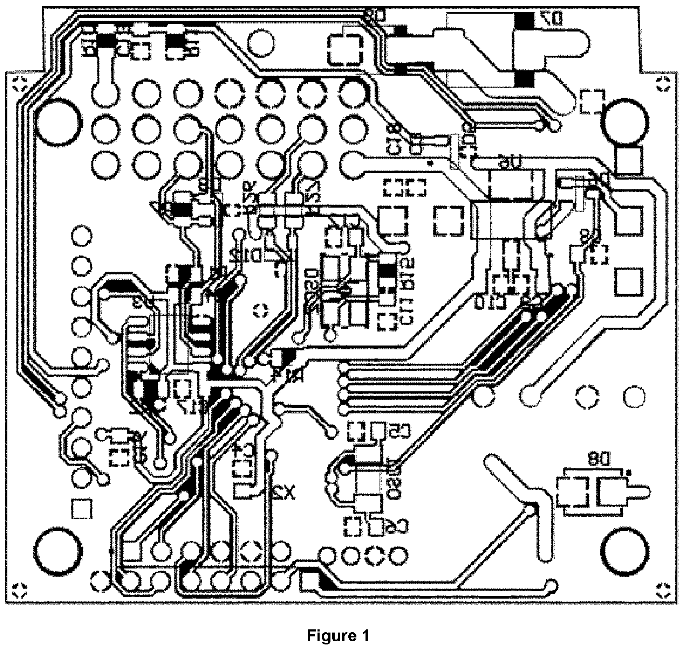

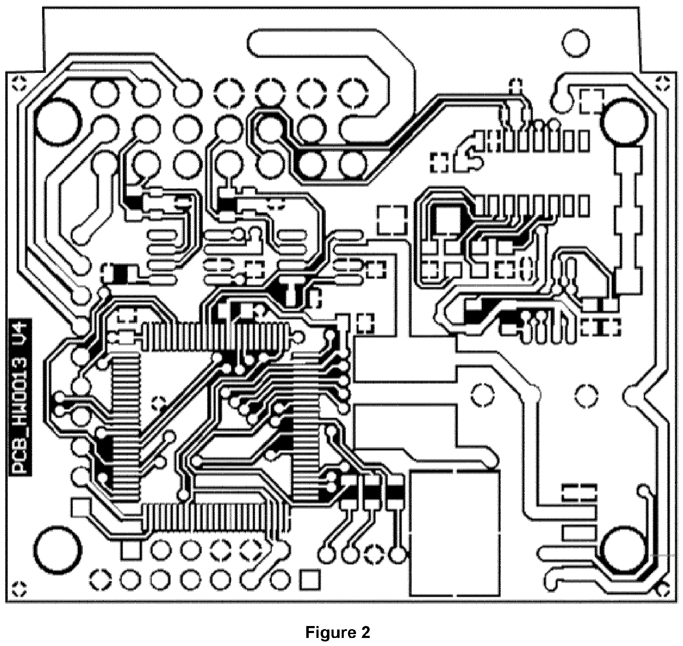

The main printed circuit board contains a power supply circuit that allows the device to operate in the voltage range from 9 to 28Vdc. With load dump (as stated in IS07637-2 and SAE J1113-11), polarity and overload protection, as shown in Figure 1, Figure 2 and Figure 3.

The main printed circuit board contains a main microcontroller connected to a set of data input and output peripherals. The main PCB communication interfaces are listed below:
- Serial interface TTL voltage level.
- Serial RS232 interface enabled by its transceiver IC.
- CAN interface enabled by its transceiver IC.
- SAE J1708 interface according to the circuit provided by the standard.
- IS09141 interface conforms to standard specification.

The accessories are secondary printed circuit boards containing the circuitry complementary to the operation of the equipment according to the desired wireless communication technology. Therefore, the main interfaces are listed:
- LoRaWAN accessory.
- WiFi + Bluetooth accessory.
- 4G/3G/2G accessory.

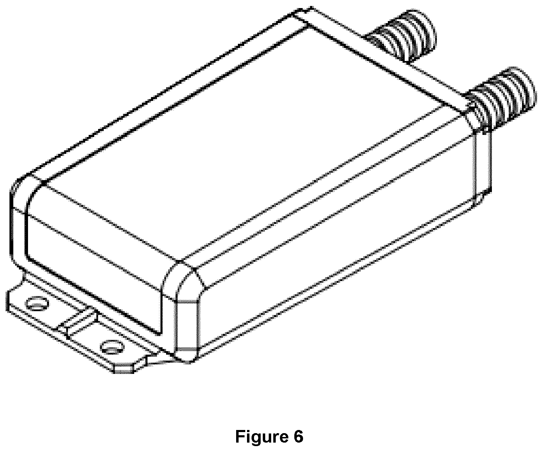

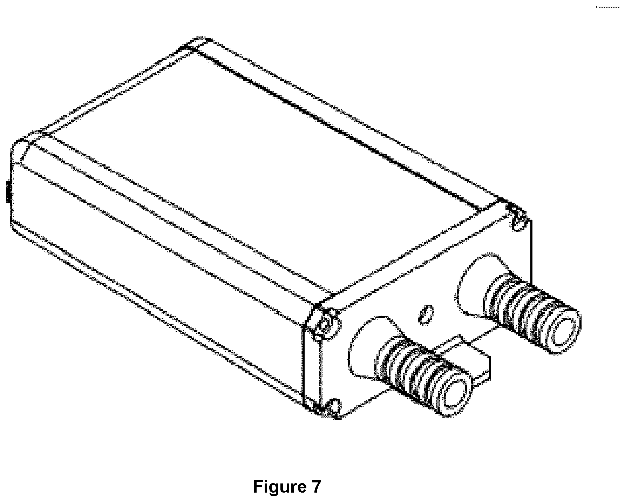

The housing in which the main PCB is mounted is illustrated in Figure 6 and Figure 7, and it is a rectangular box in the format 91 x 30 x 27 mm. The cover of the box has two holes for wiring connection and one for light indication according to the interface operating status.

Regarding the equipment connection wires:
- Twisted pair of 0.5mm² yellow and green wires must be connected respectively to the CAN-H and CAN-L wires.
- The 0.5mm² red wire must be connected to battery's positive pole (12 to 30Vdc).
- The 0.5mm² white wire must be connected to vehicle's ignition signal (12 to 30Vdc).
- The 0.5mm² black wire must be connected to battery's negative pole or vehicle's chassis ground.
- Super seal connector with 0.5mm² white, gray and purple wires used for serial interface (TTL or RS232).
- Twisted pair of 0.5mm² orange and blue wires must be connected respectively to vehicle's J1708+ and J1708- wires.
- The individual 0.5mm² blue wire must be connected to vehicle's K-line.

## Claims

1. **ROAD VEHICLES ANTI-THEFT SECURITY DEVICE BASED ON AUTOMOTIVE EMBEDDED SYSTEMS SOFTWARE, characterized by** its **highly innovative software based anti-theft strategy with permanent effect** to inhibit the next ignition cycle, add limitations regarding the vehicle's performance, resulting in the vehicle shutdown and immobilization without the need of an external electromechanical device. This is possible due to its direct interface with the known technologies for embedded automotive network.

2. **ROAD VEHICLES ANTI-THEFT SECURITY DEVICE BASED ON AUTOMOTIVE EMBEDDED SYSTEMS SOFTWARE, characterized by** its software-based **unlocking strategy,** that as well as stated in Claim 1 is performed over the embedded automotive network, restoring factory operating conditions. That in conjunction with Claim 1 characterizes a highly innovative anti-theft device in the automotive segment.

3. **ROAD VEHICLES ANTI-THEFT SECURITY DEVICE BASED ON AUTOMOTIVE EMBEDDED SYSTEMS SOFTWARE, characterized by** its modular hardware which allows the connection of additional boards carrying wireless modules for remote control of the anti-theft device. Several wireless data transmission technologies can be applied to the solution including GPRS, GSM, LTE, WiFi, Bluetooth, LoRa, ZigBee, SigFox and satellite communication.

4. **ROAD VEHICLES ANTI-THEFT SECURITY DEVICE BASED ON AUTOMOTIVE EMBEDDED SYSTEMS SOFTWARE,** as indicated in Claim 1, characterized on its **continuous operation without the need of an external** device or **power** source. Consequently, once enabled the anti-theft effect remains active even removing the device from the vehicle, as it is stored in the non-volatile memory of the vehicle set of Electronic Central Units.

5. **ROAD VEHICLES ANTI-THEFT SECURITY DEVICE BASED ON AUTOMOTIVE EMBEDDED SYSTEMS SOFTWARE, characterized by** the **Over-The-Air (OTA) update feature,** which allows the device setup in different vehicle OEM's, systems and models, as well as the deployment of corrections and new features, ensuring continuous evolution of anti-theft capabilities remotely.
